# EUROPEAN PATENT APPLICATION

(11) **EP 2 106 186 A1**
(43) Date of publication of application: **30.09.2009**
(21) Application number: 08103065.2
(22) Date of filing: 28.03.2008
(51) Int. Cl.: H04W 72/04

(54) **Method for transmitting signals in uplink direction in a 3G mobile radio communication system**

(71) Applicant: Nokia Siemens Networks Oy, 02610 Espoo (FI)
(72) Inventor: Breuer, Volker, 16727, Bötzow (DE)
(74) Representative: Bruglachner, Thomas E.

(57) **Abstract**

Method for transmitting signals in uplink direction in a 3G mobile radio communication system
wherein
- time-frequency resources for data transmission are structured in physical resource blocks - PRBs,
- a time division duplex - TDD - frame structure comprising frames, each comprising several time slots, is provided for transmitting signals in uplink and downlink direction,
- each frame comprises subframes,
- at least one uplink time slot - UpTS - is provided in a subframe as channel to carry an uplink - UL - synchronization sequence transmitted by a user equipment - UE, and
- the UL synchronisation sequence uses a part of the PRBs provided for the UpTS,
wherein the method comprises
providing a further UL channel by using at least a part of the unused PRBs of the UpTS for forming the further UL channel.

## Description

The invention relates to a method for transmitting signals in uplink direction in a 3G mobile radio communication system according to claim 1.

LTE (Long Term Evolution) is standardized by the 3GPP (3^{rd} Generation Partnership Project) as a successor of the present UMTS (Universal Mobile Telecommunication System). LTE will provide a TDD (Time Division Duplex) frame structure. Currently, work is started by 3GPP-LTE to perform a LTE TDD frame structure harmonization (FS1, FS2) to avoid market segmentation and create a Rel-8 LTE TDD System, which is competitive against alternative TDD technologies, and a future-proof TDD concept, that enables smooth evolution from 3GPP rel'8 to rel'9 and IMT-A (International Mobile Telecommunications A).

Currently, an enhanced version of FS2, which is a LTE TDD frame structure which was created similar to TD-SCDMA, is discussed with regard to frame structure harmonization. The access in LTE TDD FS2 is based on the so called special time slots where a DwPTS (Downlink Pilot Time Slot) is used to carry the DL (Downlink) synchronization sequence and a UpPTS (Uplink Pilot Time Slot) is the channel designed to carry the UL (Uplink) synchronization sequence transmitted by a UE (User Equipment). The frame structure was designed to be able to co-exist with TD-SCDMA (Time Division-Synchronous Code Division Multiple Access), a 1.6MHz carrier bandwidth system. LTE TDD is supposed to operate in bandwidth up to 20 or even 100MHz (IMT-A). Thus, TD-SCDMA is a narrowband system compared to LTE TDD. It also does not have a PRB (Physical Resource Block) concept as it is used in LTE TDD to have a separation versus frequency domain in addition besides time domain only for TD-SCDMA. According to this concept, time-frequency resources for data transmission are structured in the so called PRBs.

It is an object of the present invention to provide a novel method for transmitting signals in uplink direction in a 3G mobile radio communication system, particularly a LTE TDD system.

This object is achieved by a method for transmitting signals in uplink direction in a 3G mobile radio communication system with the features of claim 1. Further embodiments of the invention are subject to the dependent claims.

It is a basic idea of the invention to use unused PRBs of an uplink time slot - UpTS particularly provided for an initial access phase, for example the UpPTS, of a frame structure in a 3G mobile communication system, which provides a TDD frame structure, particularly a 3G-LTE TDD system, for example a Rel-8 LTE TDD system, for forming a further UL channel, thus allowing to more efficiently use available physical resources for data transmission in the 3G mobile communication system.

An embodiment of the invention provides a method for transmitting signals in uplink direction in a 3G mobile radio communication system, wherein
- time-frequency resources for data transmission are structured in physical resource blocks - PRBs,
- a time division duplex - TDD - frame structure comprising frames, each comprising several time slots, is provided for transmitting signals in uplink and downlink direction,
- each frame comprises subframes,
- at least one uplink time slot - UpTS - is provided in a subframe as channel to carry an uplink - UL - synchronization sequence transmitted by a user equipment - UE, and
- the UL synchronisation sequence uses a part of the PRBs provided for the UpTS,
wherein the method comprises
providing a further UL channel by using at least a part of the unused PRBs of the UpPTS for forming the further UL channel.
In the present LTE TDD proposals, the UpTS is a time slot - TS - only considered to carry the preamble of a random access channel - RACH. In present frame structure proposals (FS2) as described in the introductory part, only a few centered PRBs are actually used for carrying RACH messages. The rest of the subcarriers UpPTS TS and the corresponding PRBs remains unused. According to this embodiment of the invention, at least a part of these unused PRBs are used to form a further UL channel from a UE to a base station, thus, allowing to more efficiently use the physical resources of the 3G mobile communication system.

According to a further embodiment of the invention, it may be provided that
- the UL synchronisation sequence use PRBs, which are located in the middle of the UpTS, and
- at least a part of the unused PRBs at the beginning and the end of the UpTS are used for forming the further UL channel.

According to a further embodiment of the invention, it may be provided that
- 6 PRBs are used for the UL synchronisation sequence, and
- the remaining PRBs are used for forming the further UL channel.

Thus, the present invention may be smoothly implemented in a LTE TDD frame structure, not requiring significant changes of the frame structure.

In a further embodiment of the invention, the usage of the further UL channel may be optimized by
- providing at least one downlink time slot - DwTS -in a subframe as channel to carry an downlink - DL - synchronization sequence, and
- using at least a part of the unused PRBs of the DwTS to indicate the status of the further UL channel of a previous subframe in the same frequency chunk.
The DwTS may be for example the downlink pilot time slot - DwPTS. This allows the 3G mobile radio communication system to broadcast status messages about the further UL channel and enables UEs to better control usage of the further UL channel. Also, the status messages may reduce possible data transmission collisions, if two or more UEs simultaneously try to use the further UL channel for data transmission.

A further embodiment of the invention provides that in at least a part of the unused PRBs of the DwTS three special sequences indicating one of the following are transmitted as broadcast messages: (1) the further UL channel of the previous subframe was empty; (2) the further UL channel of the previous subframe was busy and the content was received correctly (acknowledgment); (3) the further UL channel of the previous subframe was busy and the content was corrupted, i.e. a collision occurred in the further UL channel of the previous subframe. This enables a UE to quickly detect whether the further UL channel may be used for data transmission. Also, it may quickly detect whether data transmission over the further UL channel failed since a collision occurred, for example when simultaneously two UEs transmit data over the further UL channel.

In a further embodiment of the invention, the transmitted broadcast messages may be also specified in more detail as follows:
- the special sequence that the further UL channel of the previous subframe was busy indicates that the further UL channel of the previous subframe was busy and data transmitted with the further UL channel was correctly received, and
- the special sequence that a collision occurred in the further UL channel of the previous subframe indicates that data transmitted with the further UL channel was not correctly received. Thus, a UE may receive detailed information about the status of the further UL channel and of the result of a data transmission over this channel and may further improve its usage of the further UL channel, especially it may improve changing the frequency chunk as several of such UL channels exist in parallel. The new UL chunk to be chosen can be done randomly hence proctecting further collision of the same 2 UEs which just had collision on a certain UL PRB/frequency chunk. Also, the more detailed status information allows to avoid possible transmission conflicts, for example when a UE detects that the previous subframe was busy, the UE knows that a usage of the further UL channel could result in a collision.

The invention provides in an embodiment also a computer program enabled to carry out at least a part of the method according to the invention when executed by a computer.

Furthermore, the invention provides in an embodiment a record carrier storing a computer program according to the invention.

According to a further embodiment of the invention, a user equipment, such as a mobile phone or mobile communication terminal, of a 3G mobile radio communication system such as a 3G LTE system is provided, wherein the user equipment is adapted to perform a method according to the invention and as described above for transmitting data in the further UL channel in uplink directions to an entity of the mobile communication system. The user equipment may be for example adapted to perform the inventive method by executing a software, implemented in the user equipment for example as part of the equipment's firmware.

A further embodiment of the invention provides a base station of a 3G mobile radio communication system, for example a 3GPP base station (eNodeB), being adapted
- to receive data transmitted from a user equipment by performing a method according to the invention, and
- to indicate the status of the further UL channel of a previously received subframe by performing a method according to the invention.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.
Fig. 1 shows a subframe of a LCR TDD frame structure as defined in 25.221;
Fig. 2 shows an embodiment of the usage of the PRBs of the UpPTS for forming the further UL channel according to the invention;
Fig. 3 shows a flow chart of an embodiment of a method for transmitting signals in uplink direction over the further UL channel formed with unused PRBs of the UpPTS according to the invention, which may be implemented in a UE; and
Fig. 4 shows a flow chart of an embodiment of a method for transmitting broadcast messages about the status of the further UL channel formed by unused PRBs of the UpPTS in unused PRBs of the DwPTS according to the invention, which may be implemented in a base station of a 3G LTE TDD mobile communication system.

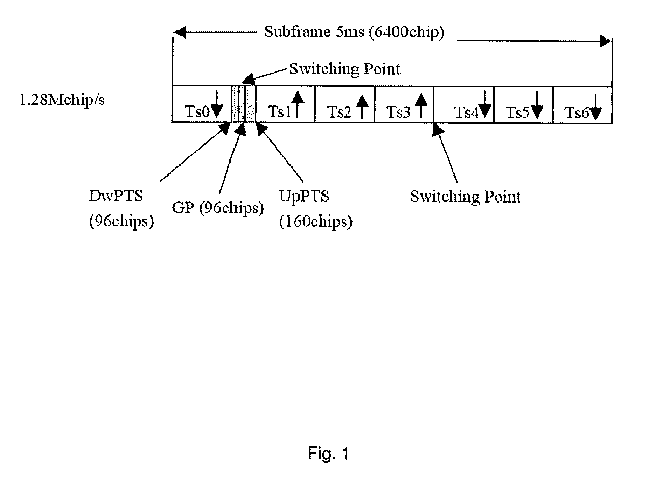

Fig. 1 shows a subframe with a length of about 5 ms or 6400 chips of the LCR (Low Chip Rate) TDD frame structure as defined in 25.221. The subframe comprises seven timeslots TSO-TS6 provided for a data transmission in the downlink ↓ (DL) and uplink ↑ (UL) direction in a mobile radio communication system, i.e. from a base station to a UE, such as a mobile terminal, and vice versa. In the subframe, two switching points, i.e. transitions from down- to uplink and from up- to downlink, are provided. The first switching point is provided at the GP (guard period) between the DwPTS and the UpPTS. The second switching point can occur anywhere between the end of TS1 and the end of TS6. In Fig. 1, the second switching point is provided between the end of TS3 and the beginning of TS4.

The access in LTE TDD FS2 is based on the special time slots DwPTS and UpPTS. The DwPTS is used for downlink synchronization and carries the DL synchronization sequence. The UpPTS is the channel designed to carry the UL synchronization sequence, which is transmitted by a UE to a base station. The UpPTS is used to determine the received timing from the UE. The frame structure with the subframe from Fig. 1 was designed to be able to coexist with TD-SCDMA, which is a 1.6 MHz carrier bandwidth system. In contrast to this, LTE TDD is supposed to operate in a bandwidth up to 20-100 MHz (IMT-A).

In the present standards and proposals for LTE, the UpPTS is a TS carrying the RACH preamble. However, the UpPTS is only considered to be used as RACH. This means that only 6 PRBs, centered in the UpPTS, are actually used for carrying RACH messages. The rest of the subcarriers remain unused. Thus for a 20-100 MHz or already starting from a 10MHz bandwidth system onwards this is just creating overhead leaving UpPTS unused, which is an inefficient use of physical resources of the 3GPP LTE system. Based on this fact, an embodiment of the invention provides that the UpPTS timeslots outside of the centre 6 PRBs (being used as RACH resources) are used as fast further UL channel for short transmissions, especially for UEs being already synchronized to the TDD timing. The data payload of such a slot can be larger then the UpPTS sequence length itself which is only a fraction of the timeslot because of the normally considered inaccurate timing information when accessing the system (i.e. pathloss based timing estimate for first UpPTS transmission may lead for near by UEs being shielded by a wall to early arrival, as initial applied timing would rather fit to a UE being far out.) The usage of the further UL channel is to be considered based on a general grant principle and does not require an explicit resource scheduling. As a consequence the usage of this UL channel would not be congestion controlled.

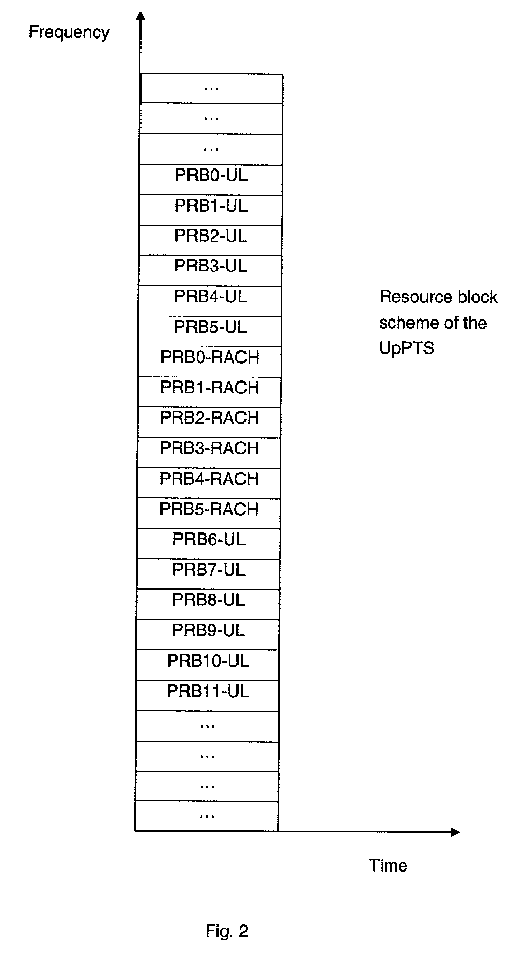

Fig. 2 shows the PRBs of the UpPTS with 6 PRBs PRB0-RACH to PRB5-RACH, centered in the UpPTS and provided for carrying RACH messages, and the usage of the further PRBs PRBO-UL to PRB11-UL of the UpPTS for forming a further fast UL channel. In the shown exemplary embodiment, 12 PRBs are provided for forming the further UL channel, however, it should be noted that in principle more or less PRBs may be used for forming the further UL channel, depending on the requirements of the further UL channel (capacity etc.).

An embodiment of the invention provides a further optimized of the usage of the further UL channel by using also the unused DwPTS TS (same reasoning as for UpPTS) for signalling the status of the further UL channel and of data transmissions over this channel. It could also be considered whether the duration of these special timeslots can not be changed to some extend, i.e. only part of the guard period is required for switching, thus, the DwPTS may be shorter as not carrying the full set of DWPTS sequences but rather only "1 out of 3 special sequences" and the UpPTS may be started earlier not affecting the position in time of any of the other resources, this would allow larger transmission to take place. According to the embodiment, the DwPTS of this non centric PRBs can be used as some indicator towards the UpPTS of the previous subframe. The DWPTS could be used with just 3 special sequences indicating either the UpPTS was empty in the last subframe, the UpPTS was busy and correctly received or content in UpPTS was not correctly received. In some way, the HS-FACH procedure can be adopt for that specific time instant and by that make use of the special time slots not being center PRBs.

In the following, two procedures for using the further UL channel for data transmission by a UE and signalling the status of the further UL channel by a base station such as a modified eNodeB are described. These procedures can be implemented as part of the firmware of the equipment of a 3G mobile radio communication system.

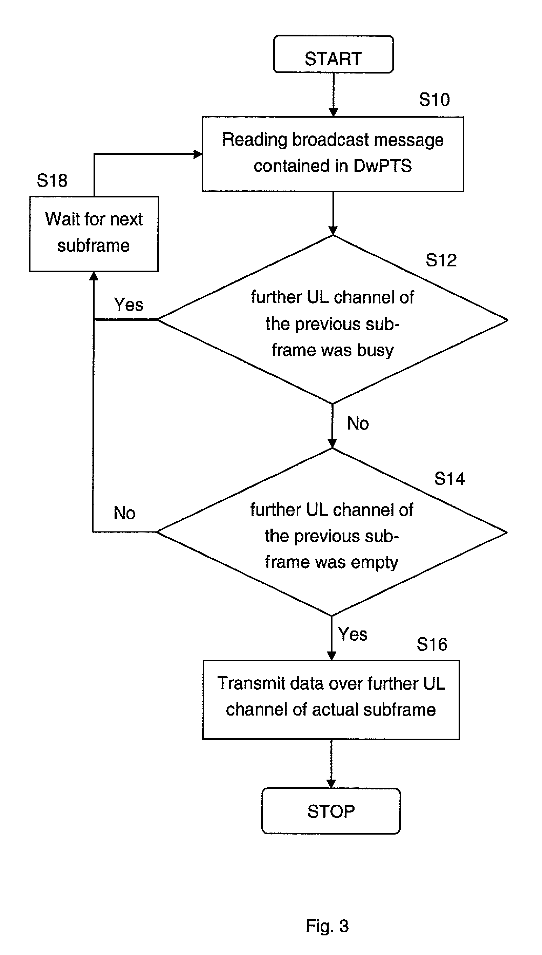

Fig. 3 shows a flow chart of a method for transmitting signals in uplink direction over the further UL channel formed with unused PRBs of the UpPTS, which may be implemented in a UE such as a 3G LTE mobile equipment, for example a terminal, modem, data card. The method of the shown flowchart may be implemented for example as a procedure of the firmware of the equipment. First, in step S10, any broadcast message contained in the DwPTS is read. In the following step S12, it is checked by means of the read broadcast message, whether the further UL channel of the previous subframe was busy. If it was busy, then the procedure waits in step S18 for the next subframe in order to proceed again with step S10. However, if the further UL channel of the previous subframe was not busy, the procedure proceeds with step S14 and checks whether the further UL channel of the previous subframe was empty. If it was empty, it is continued with step S16 and the UE begins to transmit data over the further UL channel formed in the Up PTS of the actual subframe. When the check in step S14 resulted in that the further UL channel of the previous subframe was not empty for any reason, the procedure proceeds with step S18 and waits for next subframe.

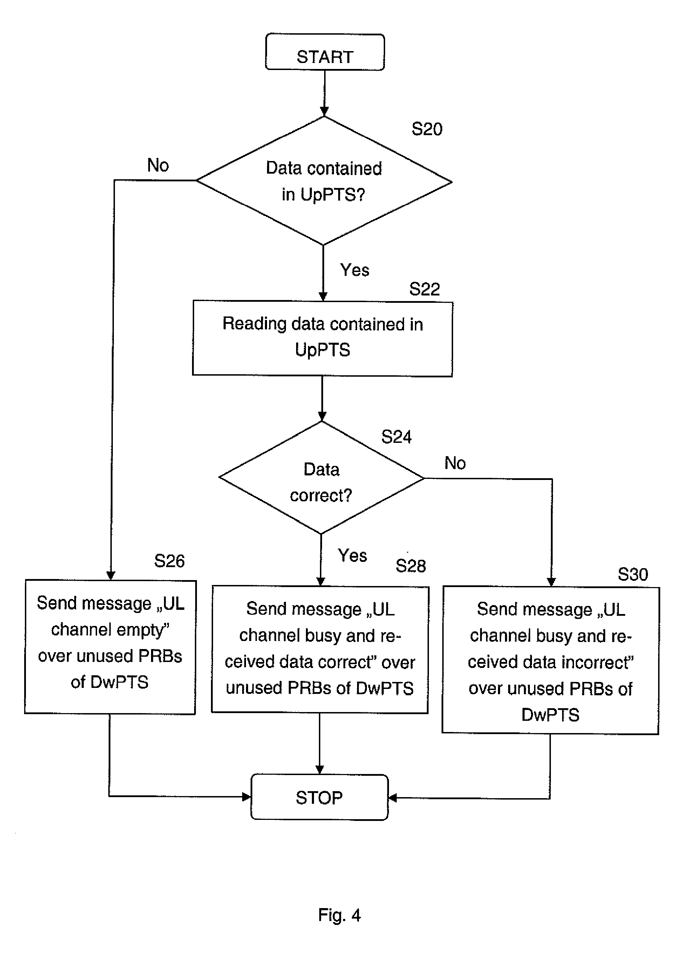

Fig. 4 shows a flow chart of a method for transmitting broadcast messages about the status of the further UL channel formed by unused PRBs of the UpPTS in unused PRBs of the DwPTS, which may be implemented in a base station of a 3G LTE TDD mobile communication system. The method of the shown flowchart may be implemented for example as a procedure of the firmware of the equipment. The procedure checks in step S20 whether data is contained in the further UL channel of the UpPTS. If data is contained, the procedure reads the contained data in step S22 and proceeds with step S24, in which it checks whether the read data is correct, i.e. was correctly received, for example by processing a checksum of the data. In some case it may happen that two or more UEs use the further UL channel of the Up PTS simultaneously, which results in a data collision and an receipt of incorrect data in the base station. If the procedure detects in step S24 that the received data is correct, it proceeds with step S28 and sends a broadcast message over the unused PRBs of the DwPTS, which signals to UEs that the UL channel is busy and received data is correct. Thus, the UE, which transmitted the data, may transmit further data over the further UL channel. However, if the received data was incorrect, the procedure jumps to step S30 and sends a broadcast message over the unused PRBs of the DwPTS, which signals to UEs that the UL channel is busy and received data is incorrect. Thus, the UE, which transmitted the data, may repeat the transmission of the same data. With regard to step S20, the procedure may also jump to a step S26, if the procedure detects that no data is contained in a received UpPTS. In step S26, the procedure sneds a broadcast message over the unused PRBs of the DwPTS, which signals to UEs, which signals to UEs that the UL channel is empty, which means that it may be used by UE for data transmission.

The above described signalling method may improve the usage of the further UL channel, formed by using at least a part of the unused PRBs of the UpPTS according to the invention.

### List of abbreviations

- 3GPP: 3^{rd} Generation Partnership Project
- DL: Downlink
- DwTS: Downlink Time Slot
- DwPTS: Downlink Pilot Time Slot
- FS: Frame Structure
- IMT-A: International Mobile Telecommunications A
- LCR: Low Chip Rate
- LTE: Long Term Evolution
- PRB: Physical Resource Block
- RACH: Random Access Channel
- TDD: Time Division Duplex
- TD-SCDMA: Time Division-Synchronous Code Division Multiple Access
- TS: Time Slot
- UE: User Equipment
- UL: Uplink
- UMTS: Universal Mobile Telecommunication System
- UpTS: Uplink Time Slot
- UpPTS: Uplink Pilot Time Slot

## Claims

1. A method for transmitting signals in uplink direction in a 3G mobile radio communication system, wherein
- time-frequency resources for data transmission are structured in physical resource blocks - PRBs,
- a time division duplex - TDD - frame structure comprising frames, each comprising several time slots, is provided for transmitting signals in uplink and downlink direction,
- each frame comprises subframes,
- at least one uplink time slot - UpTS - is provided in a subframe as channel to carry an uplink - UL - synchronization sequence transmitted by a user equipment - UE, and
- the UL synchronisation sequence uses a part of the PRBs provided for the UpTS,
wherein the method comprises
providing a further UL channel by using at least a part of the unused PRBs of the UpTS for forming the further UL channel.

2. The method of claim 1, wherein
- the UL synchronisation sequence uses PRBs, which are located in the middle of the UpTS, and
- at least a part of the unused PRBs at the beginning and the end of the UpTS is used for forming the further UL channel.

3. The method of claim 1 or 2, wherein
- 6 PRBs are used for the UL synchronisation sequence, and
- at least a part of the remaining PRBs is used for forming the further UL channel.

4. The method of any of claim 1, 2 or 3, wherein
- at least one downlink time slot - DwTS - is provided in a subframe as channel to carry an downlink - DL - synchronization sequence transmitted by a base station - BS, and
- at least a part of the unused PRBs of the DwTS is used to indicate the status of the further UL channel of a previous subframe.

5. The method of claim 4, wherein
- in unused PRBs of the DwTS three special sequences indicating one of the following are transmitted as broadcast messages: the further UL channel of the previous subframe was empty; the further UL channel of the previous subframe was busy and the content was received correctly; the further UL channel of the previous subframe was busy and the content was corrupted.

6. The method of claim 5, wherein
- the special sequence that the further UL channel of the previous subframe was busy indicates that the further UL channel of the previous subframe was busy and data transmitted with the further UL channel was correctly received, and
- the special sequence that a collision occurred in the further UL channel of the previous subframe indicates that data transmitted with the further UL channel was not correctly received.

7. A computer program enabled to carry out at least a part of the method according to any of the preceding claims when executed by a computer.

8. A record carrier storing a computer program according to claim 7.

9. A user equipment of a 3G mobile radio communication system, being adapted
- to perform a method of any of claims 1 to 3 for transmitting data in the further UL channel in uplink directions to a base station of the 3G mobile communication system.

10. A base station of a 3G mobile radio communication system, being adapted
- to receive data transmitted from a user equipment by performing a method of any of claims 1 to 3, and
- to indicate the status of the further UL channel of a previously received subframe by peforming a method of any of claims 4 to 6.
